(19) Europäisches Patentamt
European Patent Office
Office européen des brevets

(11) **EP 1 277 600 B1**

(12) **FASCICULE DE BREVET EUROPEEN**

(45) Date de publication et mention
de la délivrance du brevet:
**13.06.2007 Bulletin 2007/24**

(51) Int Cl.:
***B60C 15/00*** *(2006.01)*     ***B60C 1/00*** *(2006.01)*

(21) Numéro de dépôt: **02015828.3**

(22) Date de dépôt: **16.07.2002**

(54) **Ancrage de la carcasse d'un pneumatique**

Verankerung einer Reifenkarkasse

Tyre carcass anchoring

(84) Etats contractants désignés:
**AT BE BG CH CY CZ DE DK EE ES FI FR GB GR IE IT LI LU MC NL PT SE SK TR**

(30) Priorité: **20.07.2001 FR 0109962**

(43) Date de publication de la demande:
**22.01.2003 Bulletin 2003/04**

(73) Titulaires:
• **Société de Technologie Michelin
63000 Clermont-Ferrand (FR)**
• **MICHELIN Recherche et Technique S.A.
1763 Granges-Paccot (CH)**

(72) Inventeurs:
• **Leblond, Philippe
63100 Clermont-Ferrand (FR)**
• **Huault, Laure
63000 Clermont-Ferrand (FR)**
• **Herbelleau, Yves
63200 Riom (FR)**

(74) Mandataire: **Dequire, Philippe Jean-Marie Denis
M.F.P. Michelin,
SGD/LG/PI-F35-Ladoux
63040 Clermont-Ferrand Cedex 09 (FR)**

(56) Documents cités:
**EP-A- 0 582 196**      **WO-A-98/54006**

**Description**

La présente invention concerne les pneumatiques et plus particulièrement la disposition des renforts de renforcement de carcasse et leur ancrage dans les bourrelets.

Le document WO 98/54006 a récemment proposé un nouveau type d'armature de carcasse d'un pneumatique et de son ancrage dans ses bourrelets. Un pneumatique, selon ces demandes, comporte un sommet, deux flancs et deux bourrelets, une armature de carcasse avec des premiers renforts disposés de façon adjacente, alignés circonférentiellement en au moins un alignement circonférentiel depuis un bourrelet vers un flanc et ancrée dans ledit bourrelet, et une armature de sommet, chacun des bourrelets comportant une zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage. Ce mélange caoutchouteux d'ancrage est tel que son module d'élasticité à une déformation de 10 % est supérieur à 20 MPa et de préférence supérieur à 30 MPa.

Cette nouvelle architecture des bourrelets de pneumatiques donne d'excellents résultats notamment en endurance. La demanderesse a cependant constaté que la forte rigidité de ces bourrelets pouvait entraîner des difficultés de montage et de démontage des pneumatiques, notamment lors de montages et démontages manuels, notamment pour des pneumatiques de grandes dimensions tels des pneumatiques pour poids lourds.

La présente invention a pour objet de résoudre ce problème.

Dans ce qui suit, on entend par :

- « renfort », aussi bien des mono filaments que des multifilaments, ou des assemblages comme des câbles, des retors ou bien encore n'importe quel type d'assemblage équivalent, et ceci, quels que soient la matière et le traitement de ces renforts, par exemple traitement de surface ou enrobage ou pré encollage pour favoriser l'adhésion sur le caoutchouc ;

- « contact » entre un renfort et un mélange caoutchouteux d'ancrage, le fait que, au moins une partie de la circonférence extérieure du renfort est en contact intime avec le mélange caoutchouteux d'ancrage ; si le renfort comporte un revêtement ou un enrobage, le terme contact veut dire que c'est la circonférence extérieure de ce revêtement ou de cet enrobage qui est en contact intime avec le mélange caoutchouteux d'ancrage ;

- « axiale », une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique ;

- « radiale », une direction passant par l'axe de rotation du pneumatique et normale à celui-ci ; cette direction peut être «radialement intérieure» ou «radialement extérieure » selon qu'elle se dirige vers l'axe de rotation du pneumatique ou vers l'extérieur du pneumatique ;

- « module d'élasticité » d'un mélange caoutchouteux, un module sécant d'extension à 10 % de déformation et à température ambiante, la mesure est réalisée après un premier cycle d'accommodation jusqu'à 10 % de déformation :

- $$E_{10} = \frac{F_{10}}{S \times \varepsilon_{10}} \quad \text{i.e.} \quad E_{10} = \frac{F_{10}(1 + \varepsilon_{10})}{S_0 \times \varepsilon_{10}} \quad \text{et} \quad E_{10} = \frac{F_{10} \times 1.1}{S_0 \times 0.1}$$ dans laquelle $\varepsilon_{10}$ est égale à 0.1 ; avec $E_{10}$ :

module d'extension sécant à 10% de déformation ; $F_{10}$ : force d'extension à 10% d'extension ; $S_0$ : section initiale de l'éprouvette de test ; $S$ : section de l'éprouvette de test à la déformation d'extension $\varepsilon$, dans le cas de matériau en caoutchouc, on sait que : $S =$ $$S = \frac{S_0}{1 + \varepsilon} \; ;$$ et $\varepsilon_{10}$ : déformation d'extension à 10%.

- « Tg » d'un élastomère, la température de transition vitreuse de celui-ci mesurée par analyse thermique différentielle ;
- « test de fluage statique », un test dans lequel on prépare des éprouvettes dont la partie utile a une longueur de 70mm, une largeur de 5 mm et une épaisseur de 2,5 mm (ces éprouvettes sont découpées dans des plaques vulcanisées d'épaisseur 2,5 mm) ; on met en place les éprouvettes dans une étuve à 150°C et on leur accroche immédiatement une masse de 3 kg ; le test s'effectue ainsi avec une contrainte initiale de :

$$\sigma_0 = \frac{Mg}{S_0} = 2,35 MPa$$

avec M : masse appliquée, g : accélération de la pesanteur et $S_0$ section initiale de l'éprouvette de mesure ; on mesure en fonction du temps l'allongement de la partie utile de l'éprouvette ; le « taux de fluage statique » correspond à la variation de déformation dans un temps donné, par exemple entre 3 et 5 heures de test :

$$\tau = \frac{\Delta\varepsilon}{\Delta t}$$

avec : $\Delta\varepsilon = \varepsilon(t_2) - \varepsilon(t_1)$ variation de la déformation mesurée pendant $\Delta t = t_2 - t_1$ en minutes (mn) ;

- « test de rhéométrie » : un test de cisaillement alterné à une déformation de $\pm$ 0,2 degrés, une fréquence de 100 cycles/mn, une température de 197°C et une durée de 10 mn ; rhéomètre de la société Monsanto ; le test est effectué sur un disque de mélange cru, on enregistre l'évolution pendant les 10 mn du couple résultant du cisaillement imposé entre les deux faces du disque ; on note particulièrement ici l'évolution du couple après le maximum mesuré, si le couple mesuré reste stable, il n'y a pas de réversion, c'est-à-dire de diminution de la raideur de l'éprouvette, si le couple mesuré diminue, on indique qu'il y a une réversion ; le phénomène de réversion traduit une diminution de la rigidité de l'éprouvette dans les conditions du test ; c'est un test de la stabilité thermique du mélange à haute température ; on note :

$$r = \frac{C_{max} - C_{10}}{C_{max}} \times 100$$

le taux de réversion à l'issue du test ; $C_{max}$ est le couple maximum mesuré et $C_{10}$ est le couple mesuré après 10 mn de test ;

- « un renfort orienté circonférentiellement », un renfort orienté sensiblement parallèlement à la direction circonférentielle du pneumatique, c'est-à-dire faisant avec cette direction un angle ne s'écartant pas de plus de cinq degrés de la direction circonférentielle ; et
- « un renfort orienté radialement », un renfort contenu sensiblement dans un même plan axial ou dans un plan faisant avec un plan axial un angle inférieur ou égal à 10 degrés.

Un pneumatique selon l'invention comporte un sommet, deux flancs et deux bourrelets, une armature de carcasse avec des premiers renforts disposés de façon adjacente, alignés circonférentiellement en au moins un alignement circonférentiel depuis au moins l'un desdits bourrelets vers l'un desdits flancs et ancrée dans ledit bourrelet, et une armature de sommet, ledit bourrelet comportant une zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage en contact avec le second renfort et les tronçons adjacents des premiers renforts. Ce pneumatique est caractérisé en ce que le mélange caoutchouteux d'ancrage a un module d'élasticité à une déformation de 10 % compris entre 10 et 20 MPa et en ce que le mélange caoutchouteux d'ancrage comporte au moins un élastomère synthétique compris dans le groupe des SBR et des polybutadiènes avec une proportion totale d'élastomère synthétique supérieure à 50 % du poids total d'élastomères.

De façon très surprenante, la demanderesse a constaté que ce mélange caoutchouteux d'ancrage permettait, en dépit de sa rigidité très inférieure à ce qui était préconisé précédemment, de conserver des caractéristiques en endurance des bourrelets concernés très satisfaisantes.

De préférence, la proportion totale d'élastomère synthétique est comprise entre 55 et 65 % du poids total d'élastomères.

Au-dessus de 65 %, le collant à cru des gommes de liaison devient insuffisante et cela pose des problèmes de confection des bourrelets des pneumatiques, en revanche, en dessous de 55 %, la résistance des mélanges caoutchouteux d'ancrage à une sollicitation de fluage statique à température élevée se dégrade.

Le mélange caoutchouteux d'ancrage comporte, de préférence, un SBR de Tg comprise entre -70 et -25°C avec une proportion en poids supérieure à 20 % du poids total d'élastomères.

Il peut aussi comporter un polybutadiène de Tg comprise entre -110 et -90 °C avec une proportion en poids inférieure à 40 % du poids total d'élastomères.

En effet, la présence de polybutadiène améliore la stabilité thermique du mélange caoutchouteux d'ancrage à haute température toutefois, au-delà de 40 % du poids total d'élastomères, le mélange caoutchouteux d'ancrage devient difficile à réaliser.

L'invention a aussi pour objet un pneumatique comportant un sommet, deux flancs et deux bourrelets, une armature de carcasse avec des premiers renforts disposés de façon adjacente, alignés circonférentiellement en au moins un alignement circonférentiel depuis au moins l'un desdits bourrelets vers l'un desdits flancs et ancrée dans ledit bourrelet, et une armature de sommet, ledit bourrelet comportant une zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage en contact avec le second renfort et les tronçons adjacents des premiers renforts, caractérisé en ce que le mélange caoutchouteux d'ancrage a un module d'élasticité à une déformation de 10 % compris entre 10 et 20 MPa et en ce que le mélange caoutchouteux d'ancrage supporte sans rompre une sollicitation de fluage statique à 150°C sous une contrainte initiale de 2,35 MPa pendant au moins 5 heures.

De préférence, le mélange caoutchouteux d'ancrage a un taux de fluage statique à 150°C sous une contrainte initiale de 2,35 MPa inférieur à $2.10^{-3}$/mn entre 3 et 5 heures de sollicitation.

L'invention a aussi pour objet un pneumatique comportant un sommet, deux flancs et deux bourrelets, une armature de carcasse avec des premiers renforts disposés de façon adjacente, alignés circonférentiellement en au moins un alignement circonférentiel depuis au moins l'un desdits bourrelets vers l'un desdits flancs et ancrée dans ledit bourrelet, et une armature de sommet, ledit bourrelet comportant une zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage en contact avec le second renfort et les tronçons adjacents des premiers renforts, caractérisé en ce que ledit mélange caoutchouteux d'ancrage a un module d'élasticité à une déformation de 10 % compris entre 10 et 20 MPa et en ce que ledit mélange caoutchouteux d'ancrage a un taux de réversion après 10 mn à 197°C inférieur à 10 % et de préférence inférieur à 5 %.

Les pneumatiques selon l'invention sont de préférence tels que les premiers renforts forment des allers et retours disposés de façon adjacente, avec, dans ledit bourrelet, des boucles reliant chaque fois un aller à un retour.

L'invention est maintenant décrite à l'aide des dessins suivants :

- la figure 1 est une coupe transversale partielle montrant essentiellement un flanc et un bourrelet d'un pneumatique selon l'invention ;
- la figure 2 est une coupe transversale partielle montrant essentiellement un flanc et un bourrelet d'un second pneumatique selon l'invention ;
- la figure 3 est une vue en perspective, montrant schématiquement la disposition d'une partie des renforts de renforcement ; et
- la figure 4 présente des résultats de tests de fluage statique.

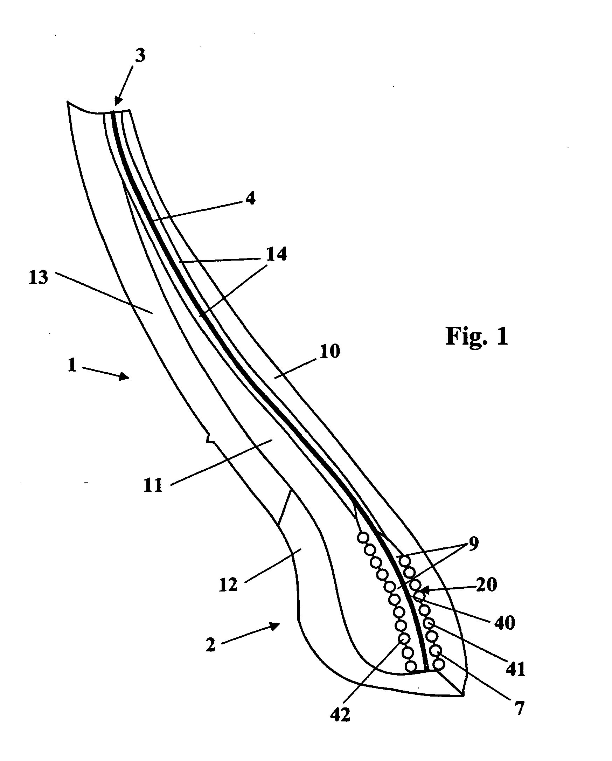

A la figure 1 est présenté, en coupe transversale partielle, un bourrelet et un flanc d'un pneumatique selon l'invention. Ce pneumatique comprend un flanc 1 adjacent à un bourrelet 2. Une armature de carcasse 3 s'étend circonférentiellement du bourrelet 2 vers le flanc 1 et comporte dans l'exemple présenté un alignement circonférentiel de premiers renforts 4. Les premiers renforts 4 sont orientés radialement dans les bourrelets et les flancs et sont ancrés dans une zone d'ancrage 20 du bourrelet 2. La zone d'ancrage 20 comprend deux éléments principaux. Deux enroulements circonférentiels 41 et 42 de seconds renforts 7 disposés de part et d'autre des tronçons 40 des premiers renforts 4 adjacents coopérant avec un mélange caoutchouteux d'ancrage 9. Ce mélange caoutchouteux d'ancrage 9 est disposé de part et d'autre des tronçons 40 des premiers renforts 4 entre ces tronçons et les enroulements circonférentiels 41, 42 de seconds renforts 7. Ce mélange caoutchouteux d'ancrage 9 est en contact direct avec au moins une portion de la circonférence des premiers 4 et seconds 7 renforts présents dans la zone d'ancrage 20. Dans l'exemple présenté, le mélange caoutchouteux d'ancrage 9 est en contact avec tous les tronçons 40 des premiers renforts 4 disposés dans la zone d'ancrage 20, axialement de part et d'autre de ceux-ci et remplit les interstices entre les premiers renforts adjacents. Ce contact direct entre le mélange caoutchouteux d'ancrage 9 et les premiers 4 et seconds 7 renforts dans la zone d'ancrage 20 est essentiel pour qu'il y ait une bonne coopération mécanique entre les seconds renforts 7 et le mélange caoutchouteux d'ancrage 9 pour ancrer solidement les tronçons 40 des premiers renforts 4 dans la zone d'ancrage 20 du bourrelet 2 et reprendre les efforts subis par les premiers renforts 4 dus notamment à la pression de gonflage du pneumatique. Les seconds renforts 7 sont sensiblement inextensibles et peuvent être des câbles métalliques. Les premiers renforts peuvent être usuellement des renforts textiles de haut module d'élasticité, tels des renforts aramides.

Axialement intérieurement relativement à l'enroulement circonférentiel de seconds renforts 41, on trouve un mélange caoutchouteux 10 usuel appelé « gomme intérieure ». Axialement extérieurement relativement à l'enroulement circonférentiel de seconds renforts 42, on trouve un mélange de bourrage 11 et un mélange protecteur 12 puis radialement extérieurement, un mélange flanc 13 les remplace progressivement. Radialement extérieurement à la zone d'ancrage 20, les premiers renforts 4 de l'armature de carcasse 3 sont en contact direct avec un mélange 14.

Les premiers 4 et seconds 7 renforts de ce bourrelet de pneumatique sont en contact avec deux mélanges caoutchouteux différents, le mélange caoutchouteux d'ancrage 9 dans la zone d'ancrage 20 et le mélange 14 radialement extérieurement. Le mélange caoutchouteux d'ancrage a comme caractéristique mécanique principale une excellente résistance au fluage associée à un module d'élasticité compris entre 10 et 20 MPa. Le mélange 14 a usuellement une rigidité plus faible, avec un module compris entre 3 et 10 MPa.

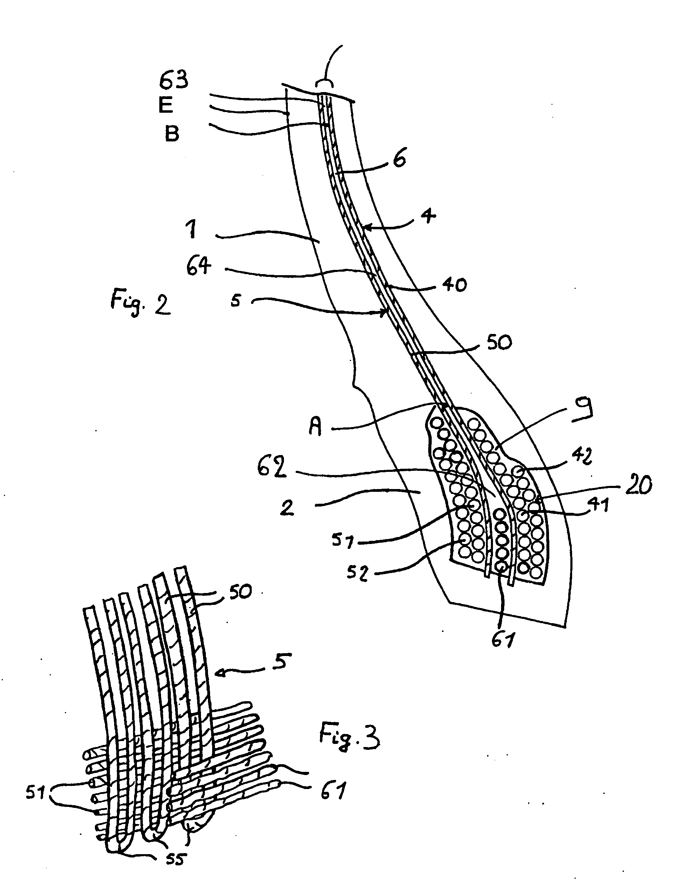

A la figure 2 est présenté un autre mode de réalisation d'un bourrelet de pneumatique selon l'invention. Ce pneumatique est destiné à équiper des véhicules routiers lourds. L'armature de carcasse 3 est constituée de deux alignements circonférentiels 4 et 5 de premiers renforts correspondant dans cette figure aux deux tronçons de renforts 40 et 50. Dans le cas du pneumatique selon l'invention décrit ici, les deux tronçons de renforts 40 et 50 sont orientées radialement dans le flanc 1 et sont constituées de fibres aramides. Les tronçons de premiers renforts 40 et 50 sont disposées parallèlement et sont séparées par un mélange caoutchouteux 6. Dans la zone d'ancrage 20 du bourrelet 2 de ce pneumatique, les deux alignements circonférentiels 4, 5 de premiers renforts sont ancrés par les enroulements circonférentiels 41, 42, 51, 52 et 61 de seconds renforts 7 disposées axialement de part et d'autre des tronçons de premiers renforts 40 et 50 et reliées aux portions de premiers renforts par un mélange caoutchouteux d'ancrage 9. Les enroulement ou piles de seconds renforts circonférentiels peuvent avantageusement être des enroulements en spirales de renforts. Dans cet exemple, ces seconds renforts circonférentiels sont des câbles métalliques enroulés en spirale. Le mélange caoutchouteux d'ancrage 9 est en contact direct avec les renforts circonférentiels et les renforts radiaux. Ce mélange caoutchouteux d'ancrage évite tout contact d'un renfort avec un autre. Cette structure permet de reprendre la tension qui se développe dans les portions de renforts 40, 50 lors du gonflage du pneumatique.

Le mélange caoutchouteux 6 est, dans l'exemple présenté, composée de trois mélanges caoutchouteux de rigidités variées. Un premier mélange 62 est situé dans la zone d'ancrage 20 de l'armature de carcasse 3 entre les deux alignements circonférentiels de premiers renforts, jusqu'à la limite A. Ce premier mélange correspond au mélange caoutchouteux d'ancrage 9 précédent et à un module d'élasticité compris entre 10 et 20 MPa. Un second mélange caoutchouteux 63 est disposé dans la zone du sommet et dans une partie des flancs 2 adjacente au sommet, c'est-à-dire à l'épaule et dans toute la partie radialement au-dessus d'une limite B située sensiblement au niveau de l'équateur E. On appelle « équateur » la « ligne » E correspondant à la plus grande largeur axiale du pneumatique. Ce second mélange a un bas module d'élasticité de l'ordre de 2 à 5 MPa. Enfin, un troisième mélange 64 est disposé dans une zone intermédiaire entre les deux limites A et B précédentes. Ce troisième mélange a un module d'élasticité intermédiaire, compris entre 6 et 10 MPa. Les deux mélanges 63 et 64 peuvent aussi être identiques.

Dans la zone d'ancrage du bourrelet de pneumatique de la figure 2, le mélange caoutchouteux d'ancrage est le seul mélange caoutchouteux en contact avec les premiers et seconds renforts (à l'exception peut-être des extrémités radialement inférieures des tronçons 40 et 50 des premiers renforts). Ce mélange donne à cette structure une excellente résistance mécanique aux efforts subis lors du gonflage du pneumatique et en roulage.

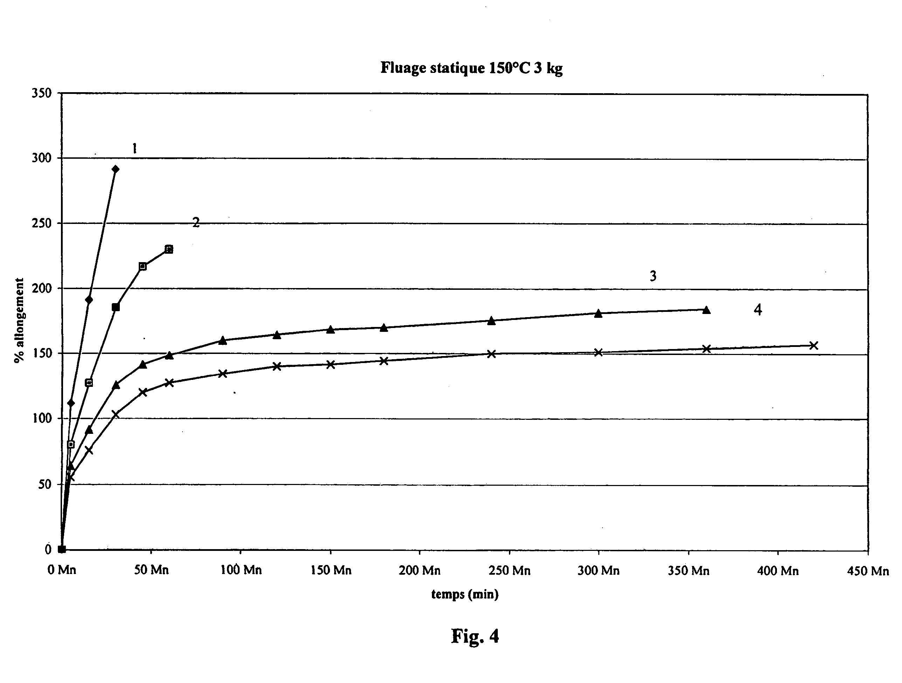

La figure 3 est une vue en perspective précisant les dispositions relatives des premiers et seconds renforts dans l'un des modes de réalisation des bourrelets de pneumatique de l'invention. Seuls les renforts de renforcement sont représentés dans cette figure 3. On voit l'alignement circonférentiel 5 de premiers renforts qui est constitué de tronçons de renforts 50. A leurs extrémités radialement inférieures, les portions de fil 50 forment des boucles 55 juxtaposées, situées dans le bourrelet 2. Ces boucles 55 sont adjacentes et ne se chevauchent pas. De part et d'autre axialement de l'alignement circonférentiel 5 de premiers renforts, sont représentées seulement les piles 61 et 51 axialement directement adjacentes à cet alignement 5.

Pour la clarté du dessin, seule l'alignement circonférentiel 5 de premiers renforts et deux piles ont été représentés, mais, l'alignement circonférentiel 4 de premiers renforts présente la même disposition des portions de renforts 40.

En variante beaucoup d'autres modes de réalisation pour notamment les premiers renforts peuvent être utilisés. A titre d'exemple, au lieu d'utiliser un fil continu formant des boucles dans le bourrelet, on peut utiliser des fils individuels posés successivement ou par groupe de quelques-uns formant une bandelette.

Le mélange caoutchouteux d'ancrage selon l'invention a donc comme caractéristiques mécaniques essentielles une rigidité telle que son module d'extension à 10 % de déformation est compris entre 10 et 20 MPa, une excellente résistance au fluage à haute température et une très bonne stabilité à haute température. La rigidité choisie donne aux structures de bourrelet décrites une souplesse suffisante pour permettre de réaliser aisément les montages et démontages des pneumatiques, même ceux de grandes dimensions, sur leurs jantes de service sans dégrader les performances d'endurance ; la résistance au fluage est essentielle pour obtenir un ancrage solide et durable des armatures de carcasse dans les bourrelets et la stabilité thermique à haute température est elle aussi importante en raison des conditions thermiques très sévères que peuvent subir en service certains bourrelets de pneumatiques, notamment des pneumatiques pour véhicules lourds, routiers ou non.

Les expérimentations ont montré que pour obtenir de bons résultats en endurance, on peut utiliser un mélange caoutchouteux d'ancrage contenant un élastomère synthétique SBR de Tg comprise entre -70 et -30°C, utilisé seul ou en coupage avec du polybutadiène. De préférence le polybutadiène a une Tg comprise entre -110 et -90°C. Le ou les élastomères synthétiques sont utilisés en proportion totalisée d'au moins 50% du poids total d'élastomère, le solde est constitué par du caoutchouc naturel. Le mélange caoutchouteux d'ancrage contient en plus des charges de renforcement tel du noir de carbone et un système de vulcanisation appropriés pour obtenir la rigidité désirée. Les seconds renforts sont dans les exemples présentés des câbles métalliques laitonnés. Il est donc nécessaire que le mélange caoutchouteux d'ancrage ait un taux de soufre important et contienne des additifs promoteurs de l'adhésion avec le laiton (par exemple des sels métalliques de cobalt ou de nickel). On utilise par exemple un taux de soufre compris entre 5 et 8 % du poids total d'élastomère et un taux de noir de carbone compris entre 60 et 70 % du poids total d'élastomère. Le noir de carbone N347 peut être utilisé préférentiellement.

Quatre mélanges ont été réalisés et testés pour illustrer les caractéristiques des mélange caoutchouteux d'ancrage selon l'invention.

Les caractéristiques principales de la formulation de ces mélanges se trouvent dans le tableau ci-dessous.

| Produits | 1 | 2 | 3 | 4 |
|---|---|---|---|---|
| CN | 100 | 80 | 40 | 40 |
| SBR2300 | 0 | 10 | 30 | 60 |
| BR113 | 0 | 10 | 30 | 0 |
| N347 | 62 | 62 | 62 | 62 |
| Soufre | 7 | 7 | 7 | 7 |

Ces quatre mélanges ont été testés ainsi :

- rigidité : détermination du module d'élasticité à 10 % d'extension et température ambiante,

- fluage : test de fluage statique à 150°C pendant 7 heures comme décrit précédemment, et

- stabilité thermique: test de rhéométrie à 197°C pendant 10 mn tel que décrit précédemment.

| Test | 1 | 2 | 3 | 4 |
|---|---|---|---|---|
| Module d'élasticité | 10,6 | 11,8 | 11,6 | 13,0 |
| Test de fluage | Rupture après 30 mn | Rupture après 60 mn | OK | OK |
| $\tau$ | ---- | ---- | $1.10^{-3}$/mn | $0,6.10^{-3}$/mn |
| r | 35 % | 26 % | 1,5 % | 7,7 % |

Les quatre mélanges ont une rigidité satisfaisante.

Le mélange 1, à base de caoutchouc naturel uniquement, présente une résistance au fluage statique à haute température tout à fait insuffisante. On observe une rupture des éprouvettes après 30 mn de test. Sa stabilité thermique est aussi non satisfaisante puisque le mélange présente un taux de réversion très marqué.

Le mélange 2 a des résultats améliorés relativement au premier mais n'est pas non plus satisfaisant.

Les mélanges 3 et 4 passent avec succès les tests de fluage statique et de rhéométrie. Leur résistance au fluage est tout à fait correcte et leur stabilité thermique à haute température aussi. Le mélange 3, qui comporte trois élastomères, présente un résultat légèrement plus satisfaisant en réversion que le mélange 4.

Des essais pneumatiques ont aussi été réalisés avec des mélanges caoutchouteux d'ancrage de formulations similaires aux mélanges de l'essai. Les pneumatiques ont montré une aptitude correcte pour les opérations de montage et de démontage, mais seuls ceux comportant un mélange caoutchouteux d'ancrage correspondant aux formulations des mélanges 3 et 4 ont montré une résistance en endurance suffisante de l'ancrage de la nappe carcasse dans les bourrelets.

L'exemple de réalisation de la figure 1 concerne un pneumatique de tourisme et celui de la figure 2 un pneumatique pour véhicule poids lourd. Mais l'homme du métier comprend bien que ces exemples sont donnés à titre non limitatif et que l'objet de l'invention peut aussi s'appliquer aux pneumatiques pour d'autres applications notamment pour deux roues.

A titre non limitatif, il est à noter que la confection des pneumatiques selon l'invention peut avantageusement être réalisée selon un procédé n'impliquant pas ou peu de transformations de formes à l'état cru. Par exemple, on peut assembler l'ébauche du futur pneumatique sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0 243 851 pour la pose des renforts du renfort de carcasse et EP 0 264 600 pour la pose des gommes caoutchouteux. Le pneumatique peut alors être moulé et vulcanisé comme exposé dans le brevet US 4 895 692.

**Revendications**

1. Pneumatique comportant un sommet, deux flancs et deux bourrelets, une armature de carcasse avec des premiers renforts disposés de façon adjacente, alignés circonférentiellement en au moins un alignement circonférentiel depuis au moins l'un desdits bourrelets vers l'un desdits flancs et ancrée dans ledit bourrelet, et une armature de sommet, ledit bourrelet comportant une zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage en contact avec le second renfort et les tronçons adjacents des premiers renforts, **caractérisé en ce que** ledit mélange caoutchouteux d'ancrage a un module d'élasticité à une déformation de 10 % compris entre 10 et 20 MPa et **en ce que** ledit mélange caoutchouteux d'ancrage comporte au moins un élastomère synthétique compris dans le groupe des SBR et des polybutadiènes avec une proportion totale d'élastomère synthétique supérieure à 50 % du poids total d'élastomères.

2. Pneumatique selon la revendication 1, dans lequel la proportion totale d'élastomère synthétique est comprise entre 55 et 65 %.

3. Pneumatique selon l'une des revendications 1 et 2, dans lequel le mélange caoutchouteux d'ancrage comporte un SBR de Tg comprise entre -70 et -25 °C avec une proportion en poids supérieure à 20 % du poids total d'élastomères.

4. Pneumatique selon l'une des revendications 1 à 3, dans lequel le mélange caoutchouteux d'ancrage comporte un polybutadiène de Tg comprise entre -110 et -90 °C avec une proportion en poids inférieure à 40 % du poids total d'élastomères.

5. Pneumatique comportant un sommet, deux flancs et deux bourrelets, une armature de carcasse avec des premiers renforts disposés de façon adjacente, alignés circonférentiellement en au moins un alignement circonférentiel depuis au moins l'un desdits bourrelets vers l'un desdits flancs et ancrée dans ledit bourrelet, et une armature de sommet, ledit bourrelet comportant une-zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage en contact avec le second renfort et les tronçons adjacents des premiers renforts, **caractérisé en ce que** ledit mélange caoutchouteux d'ancrage a un module d'élasticité à une déformation de 10 % compris entre 10 et 20 MPa et **en ce que** ledit mélange caoutchouteux d'ancrage supporte sans rompre une sollicitation de fluage statique à 150°C sous une contrainte initiale de 2,35 MPa pendant au moins 5 heures.

6. Pneumatique selon la revendication 5, dans lequel ledit mélange caoutchouteux d'ancrage a un taux de fluage statique à 150°C sous une contrainte initiale de 2,35 MPa inférieur à $2.10^{-3}$/mn entre 3 et 5 heures de sollicitation.

7. Pneumatique comportant un sommet, deux flancs et deux bourrelets, une armature de carcasse avec des premiers renforts disposés de façon adjacente, alignés circonférentiellement en au moins un alignement circonférentiel depuis au moins l'un desdits bourrelets vers l'un desdits flancs et ancrée dans ledit bourrelet, et une armature de sommet, ledit bourrelet comportant une zone d'ancrage permettant le maintien de l'armature de carcasse et comprenant au moins un second renfort orienté circonférentiellement coopérant avec une portion adjacente de l'armature de carcasse par l'intermédiaire d'un mélange caoutchouteux d'ancrage en contact avec le second renfort et les tronçons adjacents des premiers renforts, **caractérisé en ce que** ledit mélange caoutchouteux d'ancrage a un module d'élasticité à une déformation de 10 % compris entre 10 et 20 MPa et **en ce que** ledit mélange caoutchouteux d'ancrage a un taux de réversion après 10 mn à 197°C inférieur à 10 %.

8. Pneumatique selon la revendication 7, dans lequel ledit mélange caoutchouteux d'ancrage a un taux de réversion après 10 mn à 197°C inférieur à 5 %.

9. Pneumatique selon l'une des revendications 1 à 8, dans lequel lesdits premiers renforts forment des allers et retours disposés de façon adjacente, avec, dans ledit - bourrelet, des boucles reliant chaque fois un aller à un retour.

**Claims**

1. Tire containing a crown, two sidewalls and two beads, a carcass reinforcement with first cords placed adjacent, aligned circumferentially in at least one circumferential alignment from at least one of said beads to one of said sidewalls and anchored in said one bead, and a crown reinforcement, said one bead containing an anchoring zone enabling the carcass reinforcement to be maintained and including at least one circumferentially oriented second cord cooperating with an adjacent portion of the carcass reinforcement by means of a rubber anchoring compound in contact with the second cord and the adjacent sections of the first cords, wherein said rubber anchoring compound has a modulus of elasticity at a 10% deformation ranging between 10 and 20 MPa and wherein the rubber anchoring compound comprises at least one synthetic elastomer chosen in the group of SBR and of polybutadienes with a total proportion of synthetic elastomer exceeding 50% of the total weight of elastomers.

2. Tire according to Claim 1, in which the total proportion of synthetic elastomer ranges between 55 and 65%.

3. Tire according to one of Claims 1 and 2, in which the rubber-anchoring compound contains an SBR of Tg ranging between -70 and -25°C with a proportion by weight exceeding 20% of the total weight of elastomers.

4. Tire according to one of Claims 1 to 3, in which the rubber-anchoring compound contains a polybutadiene of Tg ranging between -110 and -90°C with a proportion by weight of less than 40% of the total weight of elastomers.

5. Tire containing a crown, two sidewalls and two beads, a carcass reinforcement with first cords placed adjacent, aligned circumferentially in at least one circumferential alignment from at least one of said beads to one of said sidewalls and anchored in said one bead, and a crown reinforcement, said one bead containing an anchoring zone enabling the carcass reinforcement to be maintained and including at least one circumferentially oriented second cord cooperating with an adjacent portion of the carcass reinforcement by means of a rubber anchoring compound in contact with the second cord and the adjacent sections of the first cords, wherein said rubber anchoring compound has a modulus of elasticity at a 10% deformation ranging between 10 and 20 MPa and wherein the rubber anchoring compound supports, without breaking, a static creep stress at 150°C under an initial strain of 2.35 MPa for at least 5 hours.

6. Tire according to Claim 5, in which said rubber anchoring compound has a static creep rate at 150°C under an initial strain of 2.35 MPa less than $2.10^{-3}$/min between 3 and 5 hours of stress.

7. Tire containing a crown, two sidewalls and two beads, a carcass reinforcement with first cords placed adjacent, aligned circumferentially in at least one circumferential alignment from at least one of said beads to one of said sidewalls and anchored in said one bead, and a crown reinforcement, each of the beads containing an anchoring zone enabling the carcass reinforcement to be maintained and including at least one circumferentially oriented second cord cooperating with an adjacent portion of the carcass reinforcement by means of a rubber anchoring compound in contact with the second cord and the adjacent sections of the first cords, wherein said rubber anchoring compound has a modulus of elasticity at a 10% deformation ranging between 10 and 20 MPa and wherein said rubber anchoring compound has a reversion rate after 10 min. at 197°C of less than 10%.

8. Tire according to Claim 7, in which said rubber anchoring compound has a reversion rate after 10 min. at 197°C of less than 5%.

9. Tire according to one of Claims 1 to 8, in which the said first cords form adjacent forward and return paths with loops in said one bead connecting a forward to a return path every time.

**Patentansprüche**

1. Luftreifen, umfassend eine Oberseite, zwei Flanken und zwei Wülste, eine Karkassenarmierung mit ersten Verstärkungen, die nebeneinander liegend angeordnet, umfangsmäßig in mindestens einer Umfangsaufstellung von mindestens einer der Wülste aus zu der einen der Flanken hin aufgestellt sind, und die in der Wulst verankert ist, und eine Oberseitenarmierung, wobei die Wulst einen Verankerungsbereich umfasst, welcher die Halterung der Karkassenarmierung ermöglicht, und umfassend mindestens eine zweite Verstärkung, die umfangsmäßig ausgerichtet ist und mit einem Abschnitt neben der Karkassenarmierung über eine gummiartige Verankerungsmischung zusammenwirkt, welche mit der zweiten Verstärkung und den daneben liegenden Teilstücken der ersten Verstärkungen in Kontakt steht, **dadurch gekennzeichnet, dass** die gummiartige Verankerungsmischung ein Elastizitätsmodul bei einer Verformung von 10 % zwischen 10 und 20 MPa aufweist, und dass die gummiartige Verankerungsmischung mindestens ein synthetisches Elastomer umfasst, das zu der Gruppe der SBR und der Polybutadiene gehört, mit einem Gesamtanteil von synthetischem Elastomer von mehr als 50 % des Gesamtgewichts der Elastomere.

**EP 1 277 600 B1**

**2.** Luftreifen nach Anspruch 1, wobei der Gesamtanteil von synthetischem Elastomer zwischen 55 und 65 % liegt.

**3.** Luftreifen nach einem der Ansprüche 1 und 2, wobei die gummiartige Verankerungsmischung einen SBR mit einer Glasübergangstemperatur (Tg) zwischen -70 und -25° C mit einem Gewichtsanteil von mehr als 20 % des Gesamtgewichts der Elastomere umfasst.

**4.** Luftreifen nach einem der Ansprüche 1 bis 3, wobei die gummiartige Verankerungsmischung ein Polybutadien mit einer Glasübergangstemperatur (Tg) zwischen -110 und -90° C mit einem Gewichtsanteil von weniger als 40 % des Gesamtgewichts der Elastomere umfasst.

**5.** Luftreifen, umfassend eine Oberseite, zwei Flanken und zwei Wülste, eine Karkassenarmierung mit ersten Verstärkungen, die nebeneinander liegend angeordnet, umfangsmäßig in mindestens einer Umfangsaufstellung von mindestens einer der Wülste aus zu der einen der Flanken hin aufgestellt sind, und die in der Wulst verankert ist, und eine Oberseitenarmierung, wobei die Wulst einen Verankerungsbereich umfasst, welcher die Halterung der Karkassenarmierung ermöglicht, und umfassend mindestens eine zweite Verstärkung, die umfangsmäßig ausgerichtet ist und mit einem Abschnitt neben der Karkassenarmierung über eine gummiartige Verankerungsmischung zusammenwirkt, welche mit der zweiten Verstärkung und den daneben liegenden Teilstücken der ersten Verstärkungen in Kontakt steht, **dadurch gekennzeichnet, dass** die gummiartige Verankerungsmischung ein Elastizitätsmodul bei einer Verformung von 10 % zwischen 10 und 20 MPa aufweist, und dass die gummiartige Verankerungsmischung, ohne zu zerreißen, eine statische Kriechbeanspruchung bei 150 °C unter einer ursprünglichen Belastung von 2,35 MPa mindestens 5 Stunden lang aushält.

**6.** Luftreifen nach Anspruch 5, wobei die gummiartige Verankerungsmischung eine statische Kriechrate bei 150 °C unter einer ursprünglichen Belastung von 2,35 MPa von weniger als 2, $10^{-3}$/mn zwischen 3 und 5-stündiger Beanspruchung aufweist.

**7.** Luftreifen, umfassend eine Oberseite, zwei Flanken und zwei Wülste, eine Karkassenarmierung mit ersten Verstärkungen, die nebeneinander liegend angeordnet, umfangsmäßig in mindestens einer Umfangsaufstellung von mindestens einer der Wülste aus zu der einen der Flanken hin aufgestellt sind, und die in der Wulst verankert ist, und eine Oberseitenarmierung, wobei die Wulst einen Verankerungsbereich umfasst, welcher die Halterung der Karkassenarmierung ermöglicht, und umfassend mindestens eine zweite Verstärkung, die umfangsmäßig ausgerichtet ist und mit einem Abschnitt neben der Karkassenarmierung über eine gummiartige Verankerungsmischung zusammenwirkt, welche mit der zweiten Verstärkung und den daneben liegenden Teilstücken der ersten Verstärkungen in Kontakt steht, **dadurch gekennzeichnet, dass** die gummiartige Verankerungsmischung ein Elastizitätsmodul bei einer Verformung von 10 % zwischen 10 und 20 MPa aufweist, und dass die gummiartige Verankerungsmischung nach 10 mn auf 197 °C eine Umkehrrate von weniger als 10 % aufweist.

**8.** Luftreifen nach Anspruch 7, wobei die gummiartige Verankerungsmischung nach 10 mn auf 197 °C eine Umkehrrate von weniger als 5 % aufweist.

**9.** Luftreifen nach einem der Ansprüche 1 bis 8, wobei die ersten Verstärkungen Hin- und Rückwege bilden, die nebeneinander liegend angeordnet sind, wobei in der Wulst Schleifen jeweils einen Hinweg mit einem Rückweg verbinden.

**9**

Fig. 1

63
E
B

6

1

4

64

40

5

50

Fig. 2

A

9

62

42

2

20

41

51

52

61

50

5

Fig. 3

51

61

55

**Fluage statique 150°C 3 kg**

**Fig. 4**

EP 1 277 600 B1

**EP 1 277 600 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 9854006 A
- EP 0243851 A
- EP 0264600 A
- US 4895692 A